# DEMANDE DE BREVET EUROPEEN

(11) **EP 4 137 928 A1**
(43) Date de publication de la demande: **22.02.2023**
(21) Numéro de dépôt: 22188492.7
(22) Date de dépôt: 03.08.2022
(51) Int. Cl.: G06F 3/14, G09G 3/20, G09G 3/32, G09G 3/3258, G09G 5/36, G09G 5/397

(54) **DISPOSITIF D'AFFICHAGE A COMPRESSION ET DECOMPRESSION LOCALES DES DONNEES NUMERIQUES AFFICHEES**

(30) Priorité: 18.08.2021 FR 2108755
(71) Demandeur: Commissariat à l'énergie atomique et aux énergies alternatives, 75015 Paris (FR)
(72) Inventeur: MAINGUET, Jean-François, 38054 GRENOBLE CEDEX 09 (FR)
(74) Mandataire: Brevalex

(57) **Abrégé**

Dispositif d'affichage (100) comportant :
- une matrice de pixels (102) comprenant plusieurs blocs de pixels (106) ;
- une carte vidéo (108) comprenant une entrée (110) configurée pour recevoir un signal numérique à afficher par la matrice de pixels, et une sortie (112) couplée aux blocs par l'intermédiaire d'au moins un bus de données principal (113) ;
et dans lequel :
- la matrice de pixels comprend des circuits de contrôle (114) chacun associé à un des blocs, couplé au bus de données principal et comportant un circuit mémoire principal ;
- la carte vidéo comporte un circuit de compression (115) configuré pour compresser, avant leur envoi sur la sortie, les données numériques à afficher par les blocs ;
- chaque circuit de contrôle comporte un circuit de décompression pour décompresser la partie des données numériques reçue par le circuit de contrôle avant leur stockage dans le circuit mémoire principal.

## Description

### DOMAINE TECHNIQUE

L'invention concerne le domaine des dispositifs d'affichage à matrice de pixels. L'invention s'applique avantageusement à la réalisation d'écrans de grandes dimensions.

### ÉTAT DE LA TECHNIQUE ANTÉRIEURE

Classiquement, un dispositif d'affichage tel qu'un écran de télévision ou un écran d'ordinateur reçoit un signal vidéo à travers un câble vidéo, par exemple un câble HDMI. Le signal vidéo correspond à un signal numérique codant, sans compression, des valeurs de luminosité à afficher par chaque pixel du dispositif (généralement au moins trois valeurs pour chaque pixel, c'est-à-dire une pour chaque couleur, dans le cas de pixels RVB). Ce signal vidéo est par exemple calculé par une carte graphique d'un dispositif (ordinateur, décodeur, etc.) auquel le dispositif d'affichage est relié par le câble vidéo.

Le signal vidéo reçu par le dispositif d'affichage est en pratique réceptionné par une carte vidéo qui réalise différentes opérations de décodage, de conversion et de distribution de données à destination d'une matrice de pixels du dispositif d'affichage. La carte vidéo peut réaliser tout ou partie d'une conversion numérique-analogique des données destinées à la matrice de pixels. Dans le cas le plus fréquent où la conversion numérique-analogique est réalisée dans la carte vidéo, celle-ci délivre des valeurs analogiques affichables par la matrice de pixels. Dans le cas où la carte vidéo envoie des valeurs numériques aux pixels, la carte vidéo doit assurer la génération d'un ensemble de signaux de contrôle des pixels afin de commander le temps d'affichage de chaque pixel, par exemple avec des signaux de commande de modulation PWM (modulation de largeur d'impulsion) ou BCM (modulation codée binaire). Dans ces exemples de signaux de contrôle des pixels, il n'y a pas de conversion numérique-analogique dans la mesure où chaque pixel est commandé en « tout ou rien » (en anglais « On/Off »), ou autrement dit « émet / n'émet pas ».

Chaque pixel du dispositif d'affichage comprend généralement plusieurs éléments lumineux permettant l'affichage d'un pixel de chacune des images à afficher par le dispositif. Un pixel comporte généralement au moins trois éléments lumineux modulables en intensité et chacun dédié à l'une des couleurs rouge, vert et bleu. Chaque élément lumineux peut comporter soit un émetteur de lumière modulable en intensité directement dans la couleur cible de cet élément (cas de l'OLED) ou composé d'une source de lumière bleue qui est filtrée et/ou additionnée de phosphores pour obtenir la couleur cible (cas d'autres types de LED), soit un modulateur lumineux (cas des cristaux liquides) couplé à un filtre coloré adéquat pour obtenir, à partir d'une lumière blanche émise par une source commune aux pixels, la couleur cible.

Les valeurs analogiques obtenues après conversion numérique - analogique ou les durées d'émission pour chaque pixel sont proportionnelles aux niveaux d'intensité lumineuse à afficher par chacun des éléments lumineux des pixels. Chaque élément lumineux peut être couplé à un transistor de sélection permettant de commander l'affichage du signal lumineux par l'élément lumineux. Le dispositif d'affichage comporte également des circuits d'attaque de ligne (« row driver » en anglais) commandant les transistors de sélection, et des circuits d'attaque de colonnes (« column driver » en anglais) envoyant aux pixels les valeurs correspondant aux données à afficher.

L'augmentation de la résolution des dispositifs d'affichage se traduit par une augmentation du nombre de lignes et de colonnes de la matrice de pixels du dispositif (7680 colonnes et 4320 lignes dans le format 8K), qui a pour conséquence de multiplier le nombre de puces électroniques (formant notamment les circuits d'attaque de ligne et de colonne) autour de la matrice de pixels, ainsi que le nombre de fils nécessaires pour adresser les éléments lumineux des pixels.

De plus, dans le cas d'un dispositif permettant l'affichage de vidéos ou d'images 3D, c'est-à-dire d'affichage en multiscopie, le nombre d'informations envoyées pour chaque pixel est encore plus important compte tenu de la multitude de points de vue de l'image à afficher par le dispositif, ce qui nécessite une multiplication du nombre d'éléments lumineux par pixel, et donc un plus grand nombre de fils nécessaires pour adresser les éléments lumineux des pixels. L'énergie requise pour les éléments lumineux et qui est à transmettre aux pixels est également importante.

Une réduction du nombre de fils nécessaires pour adresser les éléments lumineux des pixels serait judicieuse. Cela s'accompagnerait toutefois d'une augmentation du débit de données à transmettre sur les fils restants.

### EXPOSÉ DE L'INVENTION

Un but de la présente invention est de proposer un dispositif d'affichage dont l'architecture permette de réduire la complexité du câblage et le nombre de fils nécessaires pour adresser les éléments lumineux des pixels du dispositif d'affichage, tout en limitant le débit des données transitant sur ces fils.

Pour cela, l'invention propose un dispositif d'affichage comportant au moins :
- une matrice de blocs d'affichage, chaque bloc d'affichage étant configuré pour afficher au moins un pixel d'une image et comprenant plusieurs éléments lumineux et au moins un circuit de pilotage configuré pour générer des signaux de commande des éléments lumineux du bloc d'affichage à partir de données numériques destinées à être affichées par les éléments lumineux du bloc d'affichage ;
- une matrice de circuits de contrôle, chacun couplé et associé à au moins un bloc d'affichage et comportant un premier circuit mémoire principal configuré pour stocker les données numériques destinées à être affichées par les éléments lumineux du bloc d'affichage associé ;
- une carte vidéo comprenant au moins une entrée configurée pour recevoir un signal numérique à afficher par la matrice de blocs d'affichage, et au moins une sortie couplée à la matrice de circuits de contrôle, la carte vidéo étant configurée pour décoder le signal numérique et envoyer aux circuits de contrôle les données numériques destinées à être affichées par les éléments lumineux et encodées dans un format adapté à la matrice de blocs d'affichage ;
et dans lequel :
- la carte vidéo comporte au moins un circuit de compression configuré pour compresser, avant leur envoi sur la sortie, les données numériques destinées à être affichées par les éléments lumineux ;
- chaque circuit de contrôle comporte un circuit de décompression configuré pour décompresser les données numériques destinées à être affichées par les éléments lumineux du bloc d'affichage associé au circuit de contrôle avant leur stockage dans le premier circuit mémoire principal du circuit de contrôle.

Ce dispositif d'affichage propose de remplacer l'adressage classique lignes / colonnes par un adressage par blocs d'affichage. Cela est rendu possible grâce à l'utilisation de circuits électroniques en aval de la carte vidéo, à savoir les circuits de contrôle associés aux blocs d'affichage et les circuits de pilotage. Grâce à cette configuration rendant possible le regroupement de certaines opérations sur les données à afficher, le câblage nécessaire pour adresser les émetteurs lumineux est simplifié et nécessite moins de fils. De plus, les puces électroniques disposées généralement en périphérie de la matrice d'éléments lumineux sont éliminées et le câblage des lignes ou des colonnes peut disparaitre, ce qui rend cette configuration particulièrement avantageuse pour la réalisation d'écrans de grandes dimensions.

Une différence majeure entre un dispositif d'affichage classique et le dispositif d'affichage de l'invention est que les données envoyées en sortie de la carte vidéo sont ici numériques, et la génération des signaux de commande des éléments lumineux est réalisée au sein de chaque bloc d'affichage comprenant les éléments lumineux.

En réalisant une compression des données dans la transmission entre la carte vidéo et les circuits de contrôle, cela permet de réduire la quantité de données à transmettre aux circuits de contrôle. Par rapport aux dispositifs d'affichage de l'art antérieur, cela se traduit soit par une réduction de la consommation des bus sur lesquels sont transmises les données numériques pour une fréquence d'affichage donnée, soit par une augmentation du nombre de d'éléments lumineux auxquels des données peuvent être envoyées pour un débit donné, et donc une réduction du nombre de fils pour un écran de taille donnée.

Les blocs d'affichage peuvent être regroupés en groupes de blocs d'affichage, chaque groupe comprenant plusieurs blocs d'affichage. La carte vidéo peut envoyer les données numériques à afficher en parallèle aux différents groupes, ce qui permet d'augmenter la vitesse de transmission des données au sein de la matrice de blocs d'affichage.

La carte vidéo, pouvant également être appelée carte de pilotage, du dispositif d'affichage peut recevoir les données numériques depuis l'extérieur du dispositif d'affichage, par exemple via un câble tel qu'un câble HDMI. La carte vidéo ne correspond pas à une carte graphique (qui fait par exemple partie d'un ordinateur, d'un décodeur, etc.) dont le rôle est de définir et envoyer les données numériques d'images complètes au dispositif d'affichage.

La carte vidéo correspond à une carte électronique comportant un ou plusieurs circuits intégrés et qui est dédiée au pilotage des matrices de circuits de contrôle et de blocs d'affichage. La carte vidéo réalise, à partir du signal numérique reçu en entrée, différentes opérations de décodage, de conversion et de distribution de données à destination de la matrice de circuits de contrôle. Dans le dispositif d'affichage selon l'invention, la carte vidéo ne réalise pas la conversion numérique-analogique des données destinées aux éléments lumineux. La carte vidéo peut assurer la génération d'un ensemble de signaux de contrôle, par exemple avec des signaux de commande de modulation PWM (modulation de largeur d'impulsion) ou BCM (modulation codée binaire). De plus, la carte vidéo peut ne comporter que des circuits intégrés numériques, ce qui facilite sa réalisation.

La carte vidéo est configurée pour réaliser un décodage du signal numérique reçu, puis un nouvel encodage des données numériques obtenues selon un format adapté à la matrice de blocs d'affichage, c'est-à-dire dans un format adapté aux circuits de contrôle, au type d'éléments lumineux et aux éléments servant à la distribution de ces données dans les blocs d'affichage.

Les signaux de commande des éléments lumineux commandent, à chacun des éléments lumineux, l'affichage d'une certaine valeur de luminosité pendant une période de référence d'affichage correspondant à la durée d'affichage d'une image par la matrice de pixels.

La sortie de la carte vidéo correspond à une sortie de données numériques qui est couplée à la matrice de circuits de contrôle par un circuit ou réseau de distribution de données.

En outre, les données numériques destinées à être affichées par les éléments lumineux de chaque bloc d'affichage sont issues du signal numérique reçu par la carte vidéo et destiné à être affiché par la matrice de blocs d'affichage. Un même circuit de distribution de données peut être couplé à tous les blocs d'affichage afin que les données circulent à travers tous les blocs.

De manière avantageuse, chaque bloc d'affichage peut correspondre à un module distinct des autres blocs d'affichage et peut être reporté sur un support, par exemple un unique support, sur lequel se trouve la matrice de circuits de contrôle. De tels pixels sont très avantageux car ils sont particulièrement bien adaptés pour la réalisation d'écrans de grandes dimensions qui nécessite, pour des raisons de coûts, d'utiliser un support qui n'est pas un wafer semi-conducteur. La réalisation des blocs d'affichage sous la forme de tels modules permet également d'avoir plus de place pour les lignes d'alimentation électrique de ces blocs en raison de la surface de support disponible entre les modules, ce qui permet de réduire les résistances d'accès. Cette configuration permet en outre d'envisager la réalisation des lignes conductrices du dispositif dans un seul niveau.

Le support sur lequel se trouvent les blocs d'affichage et les circuits de contrôle peut être de type circuit imprimé, ou plus généralement peut correspondre à au moins un substrat sur lequel sont réalisées connexions électriquement conductrices, par exemple sous la forme de lignes et colonnes. Ce substrat peut par exemple être à base de verre, de plastique, ou de métal. Les lignes et colonnes de connexion peuvent être réalisées sur ce substrat par exemple par sérigraphie, par jet d'encre, etc.

Chaque circuit de contrôle peut comporter en outre un deuxième circuit mémoire principal configuré pour mémoriser les données numériques compressées reçues par le circuit de contrôle et destinées à être affichées par les éléments lumineux du bloc d'affichage associé au circuit de contrôle.

Dans ce cas, le deuxième circuit mémoire principal de chaque circuit de contrôle peut être de type FIFO (« First In First Out » en anglais). Le deuxième circuit mémoire principale peut alors être configuré pour former une mémoire de stockage tampon des données numériques compressées reçues avant la mise en œuvre de l'opération de décompression. Une telle mémoire tampon permet d'absorber les variations de débit des données numériques compressée reçues, notamment lorsque celles-ci sont compressées avec un taux de compression variable.

Le circuit de compression de la carte vidéo et le circuit de décompression de chaque circuit de contrôle peuvent être configurés pour mettre en œ uvre au moins un algorithme de compression / décompression de type JPEG, RLE ou de Golomb.

Chaque bloc d'affichage peut être configuré pour afficher un bloc de 8 x 8 pixels de l'image, ou un bloc de 16 x 16 pixels de l'image, ou un bloc de 32 x 32 pixels de l'image.

Le circuit de compression de la carte vidéo et le circuit de décompression de chaque circuit de contrôle peuvent être configurés pour mettre en œ uvre plusieurs algorithmes de compression / décompression différents pour compresser et décompresser les données numériques correspondant à une ou plusieurs images destinées à être affichées par la matrice de blocs d'affichage. Ainsi, il est possible de choisir l'algorithme le plus efficace suivant les données numériques à compresser, soit d'une image à l'autre, soit au sein d'une même image à afficher, certaines parties étant compressées avec un premier algorithme, d'autres avec un second algorithme, la carte vidéo pouvant indiquer en en-tête quel est l'algorithme à utiliser pour chaque partie.

Le dispositif d'affichage peut être un dispositif multiscopique dans lequel :
- chaque bloc d'affichage est configuré pour afficher au moins un pixel d'une image 3D formée par N images de mêmes dimensions destinées à être affichées simultanément par le dispositif d'affichage, chaque pixel de l'image 3D comprenant N sous-pixels de mêmes coordonnées spatiales et appartenant chacun à l'une des N images,
- le circuit de compression est configuré pour compresser les données numériques destinées à être affichées par les éléments lumineux de chaque bloc d'affichage en utilisant une redondance d'informations entre les N sous-pixels d'un même pixel.

L'expression « N sous-pixels de mêmes coordonnées spatiales » signifie que dans les N images de mêmes dimensions formant ensemble l'image 3D, chacun de ces N sous-pixels occupe la même position au sein de l'image.

Dans le cas d'un dispositif multiscopique, celui-ci peut être tel que :
- le circuit de compression est configuré pour réaliser une première compression utilisant une redondance d'informations entre les N sous-pixels d'un même pixel, et pour réaliser une deuxième compression des données issues de la première compression en utilisant une redondance d'informations entre des pixels voisins destinés à être affichés par un même bloc d'affichage ;
- le circuit de décompression de chaque circuit de contrôle est configuré pour réaliser une décompression correspondant à l'opération inverse de la deuxième compression ;
- chaque bloc d'affichage comporte un circuit de décompression secondaire configuré pour réaliser une décompression correspondant à l'opération inverse de la première compression.

Dans ce cas, les redondances entre sous-pixels et les redondances entre pixels voisins d'une image 3D sont utilisées judicieusement pour optimiser la compression / décompression des données.

En variante, le dispositif d'affichage peut être tel que :
- le circuit de compression est configuré pour réaliser une première compression utilisant une redondance d'informations entre les données numériques correspondant à plusieurs pixels de mêmes coordonnées spatiales et appartenant à plusieurs images de mêmes dimensions destinées à être affichées successivement par le dispositif d'affichage, et pour réaliser une deuxième compression des données issues de la première compression en utilisant une redondance d'informations entre des pixels voisins destinés à être affichés simultanément par un même bloc d'affichage ;
- le circuit de décompression de chaque circuit de contrôle est configuré pour réaliser une décompression correspondant à l'opération inverse de la deuxième compression ;
- chaque bloc d'affichage comporte un circuit de décompression secondaire configuré pour réaliser une décompression correspondant à l'opération inverse de la première compression.

Dans ce cas, les redondances entre pixels voisins d'une même image et entre des pixels de mêmes coordonnées spatiales d'images successives sont utilisées judicieusement pour optimiser la compression / décompression des données.

Chaque circuit de contrôle peut comporter au moins un circuit de réception de données configuré pour identifier les données numériques destinées à être affichées par les éléments lumineux du bloc d'affichage associé au circuit de contrôle.

Dans cette configuration particulière, le routage des différentes parties de données numériques dans les différents blocs d'affichage peut être réalisé par adressage. Cette configuration peut être mise en œuvre quelle que soit la taille des parties des données numériques, c'est-à-dire quelle que soit la quantité de données numériques destinées à chaque bloc d'affichage, que cette taille soit constante ou non d'un bloc d'affichage à l'autre. Dans chaque circuit de contrôle, une fois identifiée par le circuit de réception de données, la partie des données numériques destinée à être affichée par le bloc d'affichage auquel le circuit de contrôle est associé peut être envoyée dans le circuit de décompression du circuit de contrôle. Dans chaque circuit de contrôle, une sortie de données du circuit de décodage d'adresse principal peut être couplée à une entrée de données du circuit de décompression.

Dans une autre configuration particulière, les circuits de contrôle peuvent comporter des registres à décalage distincts des circuits mémoires principaux et couplés en série d'un circuit de contrôle à l'autre. Une telle configuration peut être mise en œuvre lorsque la taille des parties des données numériques envoyées aux blocs d'affichage est constante. Dans chaque circuit de contrôle, une sortie de données du registre à décalage peut être couplée à une entrée de données du circuit mémoire principal afin que le registre à décalage puisse transférer ces données au circuit mémoire principal.

La carte vidéo peut comporter en outre au moins une mémoire de type FIFO configurée pour stocker les données numériques destinées à être affichées par les éléments lumineux avant leur envoi aux circuits de contrôle.

Chaque circuit de contrôle peut être formé par une puce distincte du bloc d'affichage associé (ce qui a pour avantage que tous les blocs d'affichage peuvent être identiques), ou chaque circuit de contrôle peut être intégré dans le bloc d'affichage associé (tous les pixels autres que ceux intégrant les circuits de contrôle peuvent être identiques).

Chaque circuit de contrôle peut être configuré pour mettre en œuvre, après la décompression, au moins un traitement numérique des données numériques destinées à être affichées par les éléments lumineux.

Les circuits de pilotage des éléments lumineux peuvent comporter des modulateurs PWM ou BCM, ou des convertisseurs numérique - analogique.

Au moins une partie des blocs d'affichage peuvent comporter chacun au moins un photodétecteur couplé à au moins une partie d'un convertisseur analogique - numérique.

Dans tout le texte de cette demande, le terme « couplé » peut désigner soit une connexion directe entre deux éléments, sans élément intermédiaire entre eux, soit une connexion indirecte entre ces deux éléments, c'est-à-dire une connexion formée à travers au moins un élément intermédiaire.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
- la figure 1 représente schématiquement un dispositif d'affichage, objet de la présente invention, selon un premier mode de réalisation particulier ;
- la figure 2 représente schématiquement un circuit de contrôle du dispositif d'affichage et une partie d'un bloc d'affichage auquel le circuit de contrôle est associé, selon le premier mode de réalisation ;
- la figure 3 représente schématiquement un circuit de contrôle du dispositif d'affichage et une partie d'un bloc d'affichage auquel le circuit de contrôle est associé, selon un deuxième mode de réalisation ;
- la figure 4 représente schématiquement un circuit de contrôle du dispositif d'affichage et une partie d'un bloc d'affichage auquel le circuit de contrôle est associé, selon une variante du premier mode de réalisation ;
- la figure 5 représente schématiquement un bloc d'affichage du dispositif d'affichage selon une autre variante de réalisation ;
- la figure 6 représente schématiquement une partie d'un dispositif d'affichage selon une autre variante de réalisation ;
- la figure 7 représente schématiquement un exemple de réalisation de puces électroniques intégrant des éléments lumineux et de l'électronique de commande d'un dispositif d'affichage, objet de la présente invention ;
- la figure 8 représente schématiquement un circuit de contrôle du dispositif d'affichage et une partie d'un bloc d'affichage auquel le circuit de contrôle est associé, selon une première variante de réalisation d'un dispositif d'affichage multiscopique ;
- la figure 9 représente schématiquement un circuit de contrôle du dispositif d'affichage et une partie de blocs d'affichage auxquels le circuit de contrôle est associé, selon une deuxième variante de réalisation d'un dispositif d'affichage multiscopique ;
- la figure 10 représente schématiquement un circuit de contrôle du dispositif d'affichage et une partie d'un bloc d'affichage auquel le circuit de contrôle est associé, selon une troisième variante de réalisation d'un dispositif d'affichage multiscopique ;
- la figure 11 représente schématiquement un circuit de contrôle du dispositif d'affichage et une partie d'un bloc d'affichage auquel le circuit de contrôle est associé, selon une quatrième variante de réalisation d'un dispositif d'affichage multiscopique.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### EXPOSÉ DÉTAILLÉ DE MODES DE RÉALISATION PARTICULIERS

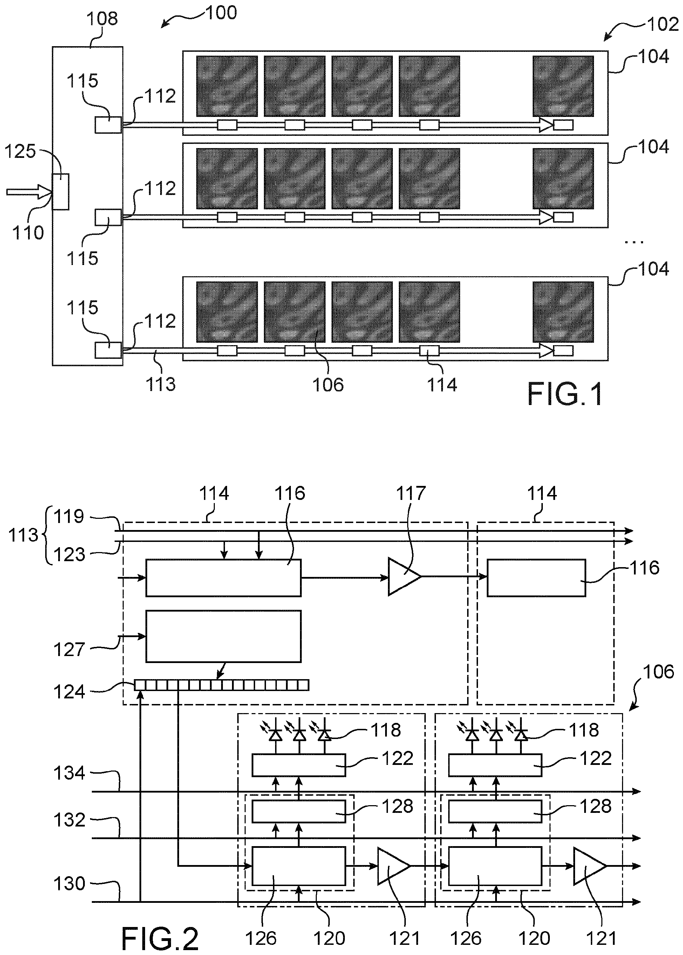

Un dispositif d'affichage 100 selon un premier mode de réalisation est décrit ci-dessous en lien avec les figures 1 et 2.

Le dispositif 100 comporte une matrice 102 de blocs d'affichage 106. Chaque bloc d'affichage 106 de la matrice 102 est configuré pour afficher au moins un pixel d'une image destinée à être affichée par le dispositif 100. Dans l'exemple de réalisation décrit ici, chaque bloc d'affichage 106 est configuré pour afficher plusieurs pixels de chaque image destinée à être affichée par le dispositif 100.

Chaque bloc d'affichage 106 comporte plusieurs éléments lumineux 118 distincts. Les éléments lumineux 118 correspondent par exemple à des LED (ou microLED) ou des OLED.

Outre ce ou ces éléments lumineux 118, chaque bloc d'affichage 106 comporte également des circuits mémoire secondaires 120 configurés pour mémoriser les données numériques destinées à être affichées par les éléments lumineux 118 du bloc d'affichage 106, et des circuits de pilotage 122 configurés pour générer des signaux de commande de ces éléments lumineux 118 à partir des données numériques destinées à être affichées par les éléments lumineux 118 du bloc d'affichage 106 et mémorisées dans les circuits mémoire secondaires 120 du bloc d'affichage 106.

L'intégration de ces circuits électroniques 120, 122, par exemple réalisés en technologie CMOS, au sein des blocs d'affichage 106 avec les éléments lumineux 118 peut être réalisée comme décrit dans les documents EP 3 381060 A1 et « A New Approach for Fabricating High-Performance MicroLED Displays » de F. Templier et al., SID Symposium Digest of Technical Papers, Volume 50 (1), June 1, 2019. Par exemple, les LED correspondant aux éléments lumineux 118 et les circuits électroniques 120, 122 de différents blocs d'affichage 106 peuvent être réalisés sur différents substrats 103, puis découpés, assemblés sous forme de modules 105 distincts (chaque bloc d'affichage 106 correspondant à un module 105 distinct des autres blocs d'affichage 106) et enfin reportés sur un support 107, correspondant par exemple à un ou plusieurs circuits imprimés ou à un ou plusieurs substrats tels que décrits précédemment, destiné à servir également de support aux autres éléments du dispositif 100.

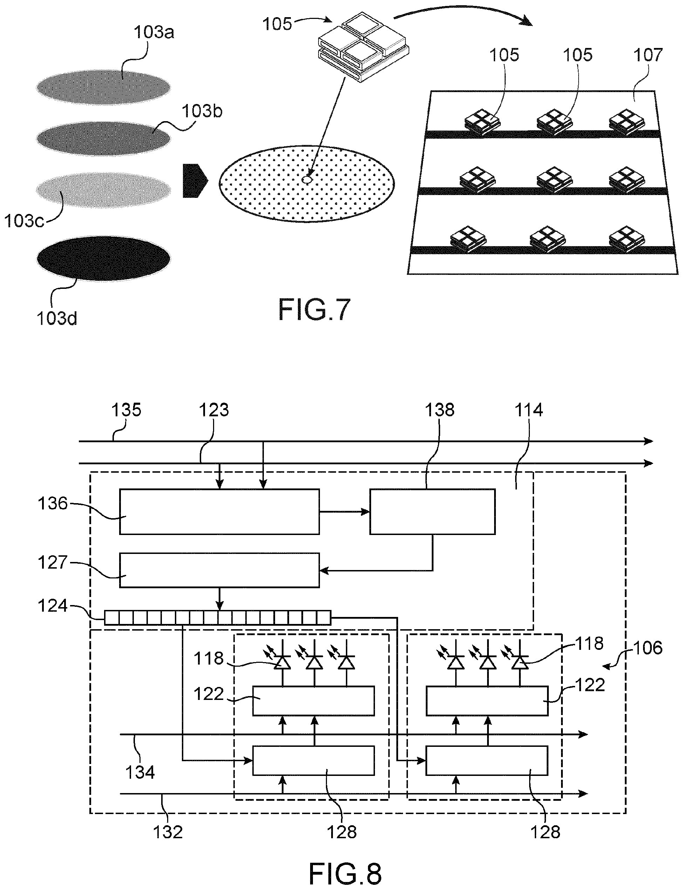

La figure 7 représente schématiquement la mise en œuvre d'une telle intégration des blocs d'affichage 106 sous forme de modules 105. Sur l'exemple de cette figure, des éléments lumineux 118 destinés à émettre chacune des couleurs rouge, vert et bleu sont réalisés sur des plaques de semi-conducteur (ou « wafers » en anglais) différentes référencées 103a, 103b et 103c pour chacune de ces couleurs. Les circuits électroniques (ici les circuits 120 et 122) sont réalisés en technologie CMOS sur une autre plaque de semi-conducteur 103d. Les éléments lumineux 118 réalisés sur les plaques 103a, 103b et 103c sont découpés puis assemblés sur la plaque 103d. Les blocs d'affichage 106 obtenus sont découpés sous la forme de modules indépendants 105. En variante, les éléments lumineux 118 peuvent être réalisés sur une seule plaque, et l'émission de couleur différente par ces éléments lumineux 118 est obtenue en ajoutant des phosphores sur les éléments lumineux 118 destinés à réaliser une émission lumineuse de couleur rouge ou verte. Dans ce cas, la plaque sur laquelle les éléments lumineux 118 sont réalisés peut être solidarisée à la plaque 103d sans découpe préalable des éléments lumineux 118.

Chaque module 105 forme un bloc d'affichage 106 comprenant les différents éléments lumineux 118 du bloc d'affichage 106, disposés sur une partie CMOS dans laquelle les circuits électroniques du bloc d'affichage 106 sont réalisés. Ces modules 105 sont ensuite reportés sur le support, portant la référence 107 sur la figure 7, à une distance souhaitée les uns des autres.

Ainsi, chaque module 105 forme un assemblage compact d'une ou plusieurs puces électroniques (avantageusement obtenues selon des procédés de fabrication de composants microélectroniques), doté d'une face de connexion comportant des plots de connexion destinés à être fixés et connectés électriquement à des plots de connexion correspondant au support de report. Ainsi, chaque module 105 comprend une puce monolithique ou un assemblage de plusieurs puces monolithiques connectées électriquement, et une pluralité de modules, par exemple identiques ou similaires, sont montés sur un même substrat de report, chaque module correspondant par exemple à un bloc d'affichage du dispositif d'affichage. A titre d'exemple, les modules élémentaires des dispositifs d'affichage décrits, comportent chacun une pluralité de LED et un circuit de commande à base de transistors, et peuvent être fabriqués selon des procédés identiques ou similaires à ceux décrits dans la demande de brevet WO 2017089676.

Dans l'exemple de réalisation décrit ici, le dispositif 100 correspond à un écran couleur et chaque pixel de l'image affichée par le dispositif 100 est obtenu avec trois éléments lumineux 118 distincts, chacun destiné à émettre un signal lumineux de l'une des couleurs rouge, vert ou bleu.

En variante, chaque pixel de l'image affichée par le dispositif 100 peut être affiché par plus de trois éléments lumineux 118 distincts, comme par exemple lorsque le dispositif 100 est un dispositif multiscopique destiné à afficher simultanément une image selon plusieurs points de vue (dans le but d'afficher cette image en 3D), avec par exemple dans ce cas chaque pixel de l'image affichée par le dispositif 100 qui est affiché par autant d'éléments lumineux 118, ou d'ensembles d'éléments lumineux 118, distincts que de points de vue de l'image à afficher. Une telle variante est décrite en détail plus loin.

En variante, chaque pixel de l'image affichée par le dispositif 100 peut être obtenu avec un seul élément lumineux 118, par exemple lorsque le dispositif 100 correspond à un écran monochrome.

Dans la configuration particulière représentée sur la figure 1, la matrice 102 est divisée en plusieurs groupes 104. Chaque groupe 104 comporte plusieurs blocs d'affichage 106.

Selon un exemple de réalisation, les groupes 104 forment des lignes de blocs d'affichage 106. Les blocs d'affichage 106 sont par exemple configurés pour afficher des blocs de 8 x 8 pixels de l'image affichée par le dispositif 100. D'autres tailles de blocs d'affichage 106 sont possibles, et sont par exemple configurés pour afficher chacun un bloc de 16 x 16 pixels, 32 x 32 pixels, etc., de l'image affichée par le dispositif 100.

Le dispositif 100 comporte une carte vidéo 108 comprenant une entrée 110 configurée pour recevoir un signal numérique correspondant à la ou aux images, ou à la ou aux vidéos, destinées à être affichées par le dispositif 100. L'entrée 110 est par exemple de type HDMI.

Le signal image ou vidéo reçu par le dispositif 100 sur l'entrée 110 de la carte vidéo 108 peut provenir de n'importe quel dispositif électronique ou informatique tel qu'un ordinateur, un décodeur, etc. Une liaison entre le dispositif d'affichage 100 et le dispositif envoyant les données numériques au dispositif d'affichage 100 est formée par exemple d'un câble HDMI.

La carte vidéo 108 comporte en outre une ou plusieurs mémoires 125 permettant de mémoriser les données reçues sur l'entrée 110 et correspondant à une ou plusieurs images à afficher par dispositif 100. De manière avantageuse, la ou les mémoires 125 sont de type FIFO.

La carte vidéo 108 comporte une ou plusieurs sorties 112 chacune couplée à un groupe 104. La carte vidéo 108 est configurée pour décoder le signal numérique reçu en entrée, encoder puis compresser les données numériques obtenues dans un format adapté à la matrice 102, et les envoyer sur chacune des sorties 112 pour qu'elles soient affichées par les blocs d'affichage 106 couplés aux sorties 112.

Les blocs d'affichage 106 de matrice 102 peuvent être répartis dans des groupes 104 configurés différemment que dans l'exemple décrit ci-dessus.

Sur l'exemple de la figure 1, les sorties 112 de la carte vidéo 108 sont reliées directement aux groupes 104 de blocs d'affichage 106. En variante, lorsque le nombre de groupes 104 est trop important par rapport au nombre de sorties 112 disponibles pour une seule puce, la carte vidéo 108 peut comporter un circuit principal réalisant les fonctions précédemment décrites pour la carte vidéo 108, et des circuits intermédiaires (non utilisés dans la configuration représentée sur la figure 1) interposés entre le circuit principal et les groupes 104. Chaque sortie du circuit principal peut être reliée à un circuit intermédiaire, et chaque circuit intermédiaire peut comporter plusieurs sorties chacune reliée à un groupe 104 afin d'assurer la distribution et la répartition des données numériques aux différents groupes 104.

Le dispositif 100 comporte également une matrice de circuits de contrôle 114, chacun couplé et associé à un bloc d'affichage 106. Chacun des circuits de contrôle 114 est configuré pour décompresser, mémoriser et envoyer au bloc d'affichage 106 associé une partie des données numériques envoyées au groupe 104 auquel appartient le bloc d'affichage 106 associé et destinées à être affichées par les éléments lumineux 118 du bloc d'affichage 106 associé.

Avant d'arriver aux blocs d'affichage 106, les données numériques envoyées depuis les sorties 112 sont compressées et transitent sur un circuit de distribution de données qui correspond, dans l'exemple de réalisation décrit ici, à des bus de données principaux 113 reliés aux circuits de contrôle 114. Pour cela, la carte vidéo 108 comporte un ou plusieurs circuits de compression 115 compressant les données numériques avant leur envoi sur les bus 113. Sur l'exemple de la figure 1, la carte vidéo 108 comporte plusieurs circuits de compression 115, chacun étant relié à l'un des groupes 104 via l'un des bus 113.

En variante, il est possible que la carte vidéo 108 comporte un seul circuit de compression 115 utilisé pour compresser, séquentiellement dans le temps, toutes les données envoyées à la matrice 102.

L'algorithme de compression utilisé pour compresser les données numériques à afficher correspond par exemple à l'algorithme JPEG. D'autres algorithmes de compression sont toutefois utilisables, comme décrit plus loin.

Un premier exemple de réalisation d'un des circuits de contrôle 114 du dispositif d'affichage 100 est décrit ci-dessous en lien avec la figure 2.

Chaque circuit de contrôle 114 comporte un circuit de réception de données correspondant ici à un registre à décalage 116, et les données numériques compressées sont transmises au sein du ou de chaque groupe 104 en reliant en série les registres en décalage 116 des circuits de contrôle 114 associés aux blocs d'affichage 106 d'un même groupe 104. Chaque circuit de contrôle 114 peut comporter un amplificateur 117, ou buffer, pour assurer le maintien du niveau d'amplitude des données transmises d'un circuit de contrôle 114 à l'autre. Dans le ou chaque groupe 104, le registre à décalage 116 d'un premier circuit de contrôle 114 comporte son entrée reliée à la ou l'une des sorties 112 de la carte vidéo 108, ou à l'une des sorties d'un des circuits intermédiaires lorsque la carte vidéo 108 comporte de tels circuits intermédiaires, via le bus 113.

Dans l'exemple de réalisation décrit ici, du fait que la quantité de données numériques compressées envoyées à chaque circuit de contrôle 114 est identique pour tous les circuits de contrôle 114, l'utilisation des registres à décalage 116 dans chaque circuit de contrôle 114 est possible.

En variante, dans le ou chaque groupe 104, tous les circuits de contrôle 114 peuvent être couplés en parallèle au bus 113. L'identification, par chacun des circuits 114, des données numériques compressées qui lui sont destinées peut dans ce cas être réalisée par un circuit de réception de données. Selon un exemple de réalisation, ce circuit de réception de données peut réaliser un décodage d'adresses associées aux données, le circuit de réception de données correspondant dans ce cas à un circuit de décodage d'adresse intégré à chacun des circuits de contrôle 114. Dans ce cas, le circuit mémorisant les données numériques compressées au sein de chacun des circuits de contrôle 114 peut ne pas être un registre à décalage.

Sur l'exemple de la figure 1, les circuits de contrôle 114 sont réalisés sous la forme de puces électroniques distinctes des puces comprenant les blocs d'affichage 106. En variante, il est possible que chacun des circuits de contrôle 114 soit formé au sein de la même puce que celle comportant le bloc d'affichage 106 associé, ce qui facilite la distribution des données entre le circuit de contrôle 114 et les circuits mémoires 120 du bloc d'affichage 106 se trouvant sur la puce.

Les circuits mémoires secondaires 120 sont chacun configurés pour mémoriser des données numériques décompressées destinées à être affichées par le ou les éléments lumineux 118 couplé(s) au circuit mémoire secondaire 120. La capacité mémoire de chaque circuit mémoire secondaire 120 correspond au moins au nombre de bits (par exemple 3x8 bits sur l'exemple de la figure 2) sur lesquels la ou les données à afficher par le ou les éléments lumineux 118 couplés au circuit mémoire secondaire 120, et qui sont ici destinés à afficher un pixel de l'image affichée par le dispositif 100, sont codées.

Dans une configuration particulière, au sein de chaque bloc d'affichage 106, les données numériques décompressées à afficher sont propagées en reliant en série les circuits mémoires secondaires 120 (qui incluent pour cela des registres à décalage). Sur la figure 2, la liaison entre la sortie d'un circuit mémoire secondaire 120 et l'entrée d'un circuit mémoire secondaire 120 suivant comporte un amplificateur ou buffer 121 permettant de maintenir le niveau des signaux de données transmis d'un circuit mémoire secondaire 120 à l'autre.

Dans une configuration alternative, les données numériques décompressées à afficher peuvent être propagées dans chaque bloc d'affichage 106 sur un bus de données secondaire auquel tous les circuits mémoire secondaires 120 du bloc d'affichage 106 sont reliés en parallèle. Un adressage des données numériques décompressées est dans ce cas réalisé pour que chaque circuit mémoire secondaire 120 identifie, via un circuit de décodage d'adresse, les données qui lui sont destinées. Une telle configuration alternative peut être envisagée lorsque la quantité de données compressées destinées à chaque circuit de contrôle 114 est variable.

Chaque circuit de contrôle 114 comporte un circuit configuré pour recevoir et stocker temporairement les données numériques compressées correspondant aux données numériques destinées à être affichées par les éléments lumineux 118 du bloc d'affichage 106 auquel ce circuit de contrôle 114 est associé. Dans le premier mode de réalisation décrit ici, ce circuit correspond au registre à décalage 116. La capacité mémoire de ce circuit est au moins égale au nombre total de bits sur lesquels sont codées les données numériques compressées à afficher par les éléments lumineux 118 de chaque bloc d'affichage 106. Par exemple, pour des blocs d'affichage 106 destinés à afficher chacun un bloc de 8 x 8 pixels, chacun des pixels étant destiné à être affiché par un ensemble de trois éléments lumineux 118 du bloc d'affichage 106 et correspondant à une donnée codée sur 8 bits, la capacité du registre à décalage est par exemple égale à 20 octets, cette valeur étant toutefois fonction du type de compression des données appliquée par la carte vidéo 108. Une compression des données sur un nombre d'octets supérieur ou inférieur à 20 octets est possible.

Le dispositif d'affichage 100 comporte également un fil 119 sur lequel est envoyé, par exemple depuis la carte vidéo 108, un signal de réinitialisation et qui est couplé à une entrée de chaque registre à décalage 116.

Le cadencement des registres à décalage 116 est commandé par un signal d'horloge transmis sur un fil 123 sur lequel transite ce signal d'horloge et qui est relié à une entrée d'horloge de chaque registre à décalage 116. Ce signal d'horloge est par exemple envoyé depuis la carte vidéo 108.

Les fils 119 et 123 font partie du bus 113 auquel les circuits de contrôle 114 sont couplés.

Chaque circuit de contrôle 114 comporte également un circuit de décompression 127 comprenant une entrée couplée à une sortie du registre à décalage 116 du circuit de contrôle 114. Le circuit de décompression 127 est configuré pour appliquer un algorithme de décompression de même nature que l'algorithme de compression utilisé pour compresser dans la carte vidéo 108 les données numériques à afficher, par exemple de type JPEG.

Une sortie du circuit de décompression 127 est couplée à une entrée d'un circuit mémoire principal 124 du circuit de contrôle 114, configuré pour mémoriser les données numériques décompressées délivrées en sortie du circuit de décompression 127.

La capacité mémoire du circuit mémoire principal 124 est au moins égale au nombre total de bits sur lesquels sont codées les données numériques décompressées à afficher par chaque bloc d'affichage 106. Par exemple, pour des blocs d'affichage 106 destinés à afficher des blocs de 8 x 8 pixels, chaque pixel étant destiné à être affiché par trois éléments lumineux 118 à partir d'une donnée codée sur 8 bits, la capacité du circuit mémoire principal 124 est par exemple égale à 192 octets (64 x 3 octets).

Une fois les données numériques décompressées par les circuits de décompression 127 puis mémorisées dans les circuits mémoires principaux 124, celles-ci sont envoyées dans les circuits mémoires secondaires 120.

Sur l'exemple de réalisation de la figure 2, chaque circuit mémoire secondaire 120 comporte un registre à décalage 126 (pouvant stocker un nombre de bits égal au nombre de bits sur lesquels sont codées les données à afficher par les éléments lumineux 118 associés à ce circuit mémoire secondaire 120) couplé à un verrou 128 (circuit « latch », dont la capacité mémoire est au moins égale à celle du registre à décalage 126). L'un des registres 126 du bloc 106, destiné à afficher le premier pixel, reçoit en entrée les données numériques décompressées mémorisées dans le circuit mémoire principal 124 du circuit de contrôle 114 associé. Les registres à décalage 126 sont couplés en série, via leurs entrées et sorties de données, au sein de chaque bloc d'affichage 106 via les amplificateurs 121, ou buffer.

Les registres à décalages 126 forment une chaîne de registres au sein de chaque bloc d'affichage 106. Par exemple, la sortie d'un registre 126 stockant une partie des données correspondant à celles d'un pixel peut être reliée à l'entrée d'un registre 126 suivant destiné à stocker une autre partie des données correspondant à ce pixel ou une partie des données correspondant à un pixel « suivant ». En variante, il est possible d'avoir un seul registre commun aux circuits mémoires secondaires 120 destinés à stocker les données correspondant à un même pixel, ou bien, selon une autre variante, d'avoir, au sein d'un bloc d'affichage 106, plusieurs chaînes de registres 126, par exemple chacune destinée à stocker les données correspondant à une couleur de pixels destinés à être affichés par le bloc d'affichage 106. D'autres variantes sont également possibles.

Dans l'exemple de la figure 2, l'un des registres 126 du bloc d'affichage 106, qui est destiné à stocker les données correspondant à un premier des pixels destinés à être affichés par le bloc d'affichage 106, est relié au circuit de contrôle 114 et reçoit successivement en entrée les données mémorisées dans le circuit mémoire principale 124 du circuit de contrôle 114. Au rythme d'un signal d'horloge cadençant le déplacement série des données à travers la chaîne de registres 126, les données initialement présentes dans le circuit mémoire principal 124 sont positionnées dans l'ensemble des registres de la chaîne. L'amplificateur 121, ou buffer, peut être présent en sortie de chaque registre pour assurer si nécessaire le maintien du niveau d'amplitude des données transmises. Tous les registres 126 du bloc d'affichage 106 reçoivent en entrée un signal d'horloge de décalage généré par le circuit de contrôle 114 et commandant le décalage des données dans les registres. Le signal d'horloge de décalage peut être généré par le circuit de contrôle 114 à partir du signal d'horloge principal transmis sur le bus 113. Enfin, tous les verrous 128 du bloc d'affichage 106 reçoivent un signal de déclenchement de mémorisation généré par le circuit de contrôle 114 et qui commande le stockage, dans les verrous 128, des valeurs numériques présentes dans les registres 126. Ce signal de déclenchement de mémorisation est par exemple généré à partir du signal de déclenchement d'affichage transmis sur un fil 132, par exemple lorsque la transmission des données dans tous les circuits de contrôle 114 est achevée dans le groupe 104.

Un signal de commande d'affichage transite sur un fil 134 et est appliqué en entrée des circuits de pilotage 122 pour commander la génération des signaux de commande des éléments lumineux 118. Dans l'exemple de réalisation décrit ici, chaque circuit de pilotage 122 correspond à un modulateur PWM générant un signal modulé PWM à partir des signaux numériques reçus. Un tel signal modulé PWM forme une impulsion d'amplitude maximale de valeur fixe et dont la durée est déterminée par la valeur à afficher par les éléments lumineux 118. Par rapport à un convertisseur numérique - analogique, un modulateur PWM occupe une surface de semi-conducteur bien moins importante, et permet de s'affranchir d'éventuels problèmes de linéarité des éléments lumineux 118.

La sortie de chaque circuit de pilotage 122 est couplée aux éléments lumineux 118. Le signal de commande d'affichage peut être généré par le circuit de contrôle 114 ou par la carte vidéo 108. La fréquence du signal de commande d'affichage est choisie comme étant suffisamment élevée pour éviter des problèmes de scintillement, et par exemple comprise entre 100 et 1000 fois la fréquence d'affichage d'images du dispositif 100, voire plus importante encore, comme par exemple égale à quelques MHz ou quelques dizaines de MHz (l'utilisation d'une fréquence élevée a pour avantage de réduire le besoin de précision sur la fréquence de ce signal). Le signal d'horloge de commande peut être dérivé du signal d'horloge principal transmis sur le fil 123 ou localement créé.

En variante du modulateur PWM décrit ci-dessus, il est possible que chaque circuit de pilotage 122 corresponde à un modulateur BCM. Des détails d'une telle modulation appliquée à l'affichage d'une matrice de pixels sont donnés dans le document EP 3 550 550 A1.

Du fait que la quantité de données numériques décompressées correspondant à chaque pixel est choisie comme étant identique pour tous les pixels destinés à être affichés par le bloc d'affichage 106, des registres à décalage 126 peuvent être utilisés au sein du bloc d'affichage 106, ces registres étant peu coûteux en surface de semi-conducteur.

Au sein de chaque bloc d'affichage 106, les registres à décalage 126 peuvent être reliés en série de différentes manières : ligne par ligne, colonne par colonne, en serpentin, etc. Le schéma de connexion des circuits mémoires secondaires 120 entre eux au sein de chaque bloc d'affichage 106 est pris en compte lors de la compression des données afin que les éléments lumineux 118 affichent bien les données qui leur sont destinées. Ainsi, l'ordre dans lequel les données numériques sont envoyées dans chaque bloc d'affichage 106 tient compte de la liaison des circuits mémoires secondaires 120 au sein du bloc d'affichage 106.

Dans l'exemple de réalisation décrit ci-dessus, tous les éléments et circuits destinés à afficher chaque pixel sont identiques, et tous les circuits de contrôle 114 sont identiques, ce qui facilite leur fabrication.

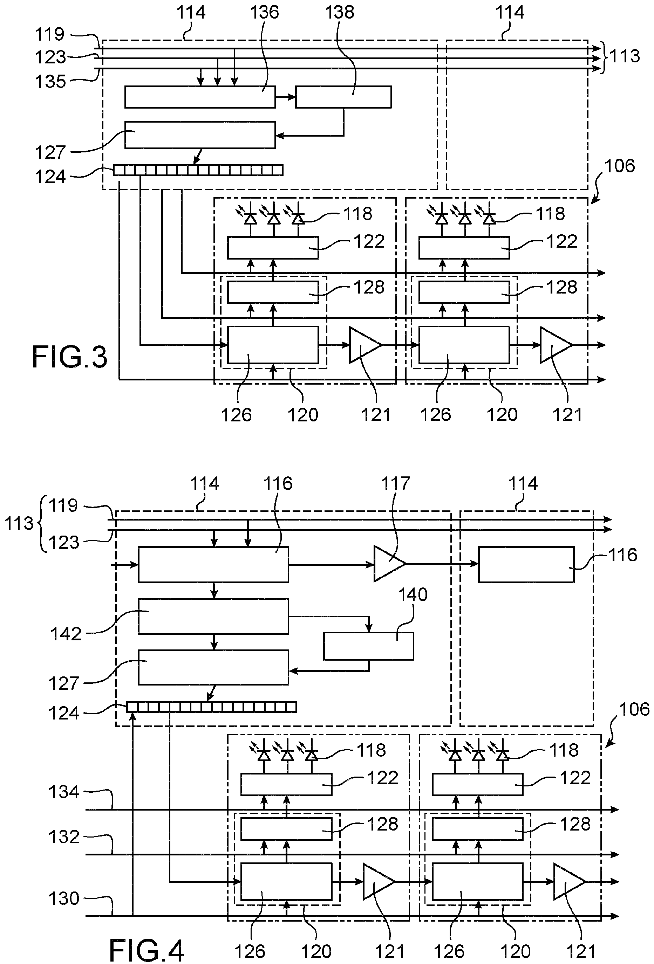

Un exemple de réalisation du dispositif d'affichage 100 selon un deuxième mode de réalisation est décrit ci-dessous en lien avec la figure 3.

Contrairement au premier mode de réalisation dans lequel les données numériques sont compressées avec un taux de compression de valeur constante, le dispositif d'affichage 100 selon le deuxième mode de réalisation est configuré pour utiliser un algorithme compressant les données numériques avec un taux de compression variable. L'algorithme de compression / décompression utilisé dans les circuits de compression 115 et les circuits de décompression 127 correspond par exemple à l'algorithme RLE (« Run-Length Encoding ») ou l'algorithme de Golomb.

Dans ce deuxième mode de réalisation, les données numériques compressées par les circuits de compression 115 sont envoyées sur un fil 135 faisant partie du bus 113 auquel les circuits de contrôle 114 sont couplés. Ainsi, contrairement au premier mode de réalisation dans lequel, dans chaque groupe 104, les données numériques compressées sont transmises dans les circuits de contrôle 114 qui sont couplés en série les uns aux autres, les données numériques compressées sont ici, dans le deuxième mode de réalisation, transmises parallèlement à tous les circuits de contrôle 114. L'identification, par chacun des circuits 114, des données numériques chiffrées qui lui sont destinées est réalisée par un circuit de réception de données 136 intégré à chacun des circuits de contrôle 114 et réalisant par exemple un décodage d'adresses associées aux données.

Chaque circuit 114 comporte également un deuxième circuit mémoire principal 138, par exemple de type FIFO, dans lequel les données numériques compressées adressées au circuit 114 sont stockées. L'utilisation de deuxièmes circuits mémoires principaux 138 de type FIFO au sein des circuits 114 permet, dans ce deuxième mode de réalisation, d'absorber, ou compenser, les variations du taux de compression des données numériques compressées reçues par les circuits 114 et qui se traduisent par des quantités variables de données numériques destinées à chacun des circuits 114. Dans ce deuxième mode de réalisation, étant donné que la quantité de données numériques adressées à chaque circuit de contrôle 114 varie, les données numériques correspondant à une ou plusieurs images à afficher peuvent être envoyées et stockées dans les deuxièmes circuits mémoires principaux 138 pendant que le dispositif d'affichage 100 est en train d'afficher les données correspondant à une autre image.

Pour éviter que les deuxièmes circuits mémoires principaux 138 ne soient saturés et ne puissent plus mémoriser d'images, il est possible que la carte vidéo 108 réalise un calcul permettant de savoir si les données numériques correspondant à une image complète peuvent être envoyées aux circuits de contrôle 114. Un bit mémorisé dans chacun des deuxièmes circuits mémoires principaux 138 peut également être utilisé pour indiquer un début d'image afin de pouvoir gérer les éventuels dépassements de capacités de ces deuxièmes circuits mémoires principaux 138.

Les données numériques compressées mémorisées dans les deuxièmes circuits mémoires principaux 138 sont ensuite envoyées dans les circuits de décompression 127 qui réalisent, comme dans le premier mode de réalisation, la décompression de ces données. Les données numériques décompressées sont mémorisées dans les circuits mémoires principaux 124 puis envoyées dans les circuits mémoire secondaires 120 auxquels les circuits de pilotage 122 sont couplés.

En outre, dans l'exemple de réalisation décrit ici, les signaux d'horloge et de commande appliqués en entrée des circuits mémoires secondaires 120 et des circuits de pilotage 122 d'un bloc d'affichage 106 sont émis depuis le circuit de contrôle 114 associé à ce bloc d'affichage 106.

Dans les exemples de réalisation précédemment décrits, l'algorithme de compression / décompression mis en œuvre dans le dispositif d'affichage 100 n'utilise pas de données communes, comme par exemple des tables de correspondances servant à la compression et à la décompression (à titre d'illustration, la matrice de Huffmann correspond à des données communes utilisées dans le cas du JPEG). En variante, il est possible que l'algorithme de compression / décompression mis en œuvre dans le dispositif d'affichage 100 fasse appel à de telles données communes qui, dans ce cas, sont transmises à chacun des circuits de contrôle 114. L'application de cette variante aux premier et deuxième modes de réalisation est décrite ci-dessous.

Lorsque cette variante (utilisation de données communes) est appliquée au premier mode de réalisation, plusieurs solutions sont possibles :
- utiliser au sein de chaque circuit de contrôle 114 un registre à décalage 116 de plus grande capacité, transmettre ces données communes sur le même fil que celui servant à la transmission des données numériques à afficher (ces données communes sont répétées autant de fois que le nombre de circuits contrôle 114 reliés en série et interposées entre chaque groupe de données numériques destinées à chaque circuit de contrôle 114), ou
- utiliser au sein de chaque circuit de contrôle 114 un autre circuit mémoire 140 distinct du registre à décalage 116, et transmettre ces données communes à tous les circuits de contrôle 114 en utilisant un fil distinct de celui servant à la transmission des données numériques à afficher, ou
- utiliser au sein de chaque circuit de contrôle 114 un autre circuit mémoire 140 distinct du registre à décalage 116, et transmettre ces données communes sur le même fil que celui servant à la transmission des données numériques à afficher. Les données communes sont dans ce cas transmises avant les données numériques et peuvent être distinguées des données numériques à afficher par exemple en convenant d'un code d'en-tête indiquant qu'il s'agit des données communes. La détection d'en-tête réalisée par un détecteur 142 peut correspondre à une comparaison entre l'en-tête reçu et une valeur d'en-tête mémorisée dans le détecteur 142. Une telle solution correspond à la configuration représentée sur la figure 4.

Lorsque cette variante (utilisation de données communes) est appliquée au deuxième mode de réalisation, il est possible d'envoyer ces données communes à tous les circuits de contrôle 114 en utilisant une adresse spécifique reconnue par tous les circuits de contrôle 114. Les circuits de contrôle 114 peuvent dans ce cas comporter un circuit mémoire supplémentaire dans lequel ces données communes sont mémorisées.

Quel que soit l'algorithme de compression / décompression utilisé, il est possible, lorsque le taux de compression obtenu n'est pas suffisant voire même lorsque la quantité de données obtenue après compression est plus importante qu'avant la compression (ce qui peut arriver par exemple avec l'algorithme RLE), que les données soient transmises sans être compressées. Un bit des données transmises aux circuits de contrôle 114 peut par exemple servir à indiquer si les données ont été comprimées ou non.

En outre, il est possible que le dispositif d'affichage 100 utilise un algorithme de compression / décompression adaptatif. Par exemple, les images transmises peuvent être compressées et décompressées en utilisant différents types d'algorithme suivant la nature de l'image, ou bien encore que différentes parties d'une image soient compressées en utilisant différents algorithmes de compression / décompression. Un ou plusieurs bits des données transmises aux circuits de contrôle 114 peuvent par exemple servir à indiquer l'algorithme utilisé. Chaque circuit de contrôle 114 et chaque circuit de compression est dans ce cas configuré pour mettre en œuvre ces différents algorithmes de compression / décompression.

Dans tous les modes de réalisation et variantes décrits précédemment, il est possible que les éléments destinés à l'affichage de chaque pixel, ou d'au moins une partie des pixels, comportent au moins un capteur, ou photodétecteur, permettant ainsi au dispositif d'affichage 100 de réaliser une photodétection depuis la matrice 102.

Dans ce cas, les photodétecteurs (qui correspondent par exemple à des photodiodes) peuvent être couplés à des convertisseurs analogique - numérique dont le rôle est de convertir les données analogiques délivrées par les photodétecteurs en données numériques. Le choix du nombre de bits avec lesquels les données analogiques sont converties dépend notamment de la résolution souhaitée et également de la place disponible dans la matrice 102. A titre d'exemple, un tel convertisseur analogique - numérique peut être apte à réaliser une conversion sur 8 bits ou sur 4 bits, voire même 1 bit (le convertisseur formant dans ce cas un comparateur).

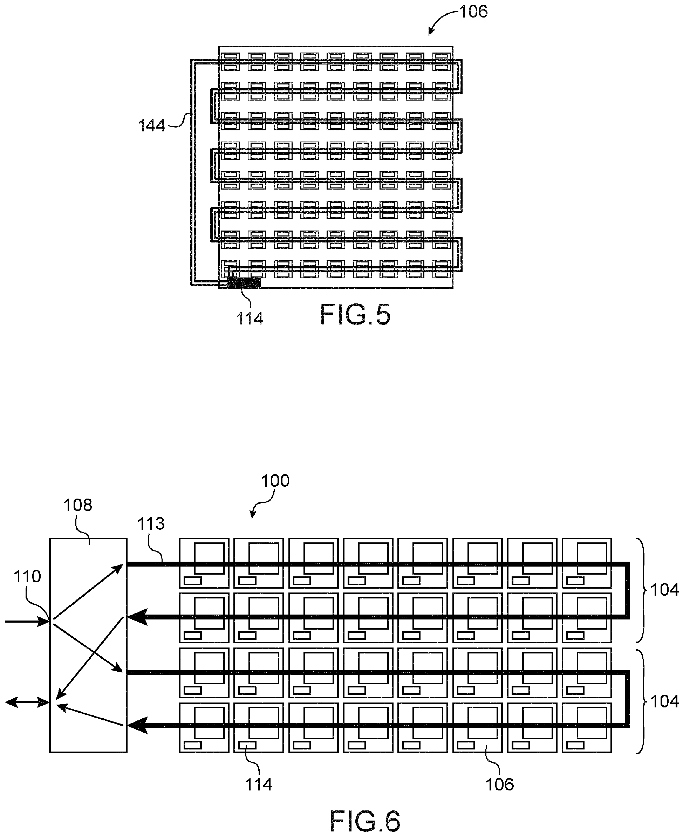

Les données acquises par les photodétecteurs présents dans un même bloc d'affichage 106 sont envoyées dans le circuit de contrôle 114 associé à ce bloc d'affichage 106. De manière avantageuse, afin de faciliter la récupération des données de photodétection, le fil servant à la transmission du signal de données numériques à afficher au sein de chaque bloc d'affichage 106 est rebouclé depuis la sortie du dernier registre 126 du bloc d'affichage 106 jusqu'à une entrée du circuit de contrôle 114 associé au bloc d'affichage 106. Cette configuration, visible sur la figure 5 qui représente schématiquement un bloc d'affichage 106 et sur laquelle le fil de rebouclage porte la référence 144, permet d'éviter l'ajout d'un fil supplémentaire et d'un autre circuit mémoire dans chaque pixel pour transmettre les données acquises depuis les photodétecteurs jusqu'au circuit de contrôle 114, ce qui réduit l'encombrement et les coûts.

Les données de photodétection récupérées sur les circuits de contrôle 114 peuvent ensuite être pré-traitées numériquement dans les circuits de contrôle 114, par exemple pour réaliser une détection de mouvement en stockant localement les données acquises au temps précédent, en effectuant un calcul des différences avec les données qui viennent d'être acquises, et en ne transmettant que les données pertinentes, par exemple les changements, ce qui réduit la quantité de données à envoyer vers l'extérieur, puis à traiter.

En outre, les données de photodétection peuvent être compressées avant d'être envoyées en dehors de la matrice 102, par exemple à la carte vidéo 108. Au moins une partie du circuit de décompression 127 peut être utilisée pour réaliser cette compression au sein des circuits de contrôle 114.

L'envoi des données à la carte vidéo 108 peut être réalisé en rebouclant les bus 113 sur des entrées de la carte vidéo 108, comme sur l'exemple de la figure 6. Les données acquises peuvent alors être transmises en dehors de la carte vidéo 108.

Dans les exemples de réalisation précédemment décrits, chaque circuit mémoire secondaire 120 comporte un registre à décalage 126 couplé à un verrou 128, et chaque circuit de pilotage 122 comporte un modulateur PWM ou BCM. En variante, chaque circuit de pilotage 122 peut comporter, à la place du modulateur PWM ou BCM, un convertisseur numérique - analogique délivrant en sortie un signal analogique pilotant l'émission lumineuse de l'un des éléments lumineux 118. Chaque convertisseur numérique - analogique convertit la donnée numérique à afficher mémorisé dans un des circuits mémoire secondaires 120 en un courant envoyé à l'entrée d'un des éléments lumineux 118 et dont la valeur est par exemple déterminée suivant une courbe de conversion adaptée aux caractéristiques de chaque élément lumineux 118.

Par rapport aux convertisseurs numérique - analogique, les modulateurs PWM ou BCM ont pour avantage d'être moins encombrants et d'envoyer en entrée des éléments d'affichage des signaux analogiques de même amplitude maximale, ce qui facilite la commande des éléments lumineux 118.

En outre, dans les exemples de réalisation précédemment décrits, le circuit mémoire secondaire 120 et le circuit de pilotage 122 destiné à l'affichage de chaque pixel reçoivent en entrée le signal de données, un signal d'horloge de décalage commandant les registres à décalage 126, un signal de commande d'affichage destiné aux modulateurs PWM ou BCM, et un signal de déclenchement de mémorisation commandant les verrous 128. En variante, ces éléments peuvent ne recevoir qu'un seul signal. Dans cet unique signal, les données peuvent être codées en utilisant la durée des impulsions telle que par exemple :
- un état haut de courte durée (par exemple égale à un tiers de la période) code un bit dans un premier état (par exemple « 0 ») ;
- un état haut de longue durée (par exemple égale à deux tiers de la période) code un bit dans un deuxième état (par exemple « 1 ») ;
- un état bas pendant toute une période correspond à un reset, commandant l'affichage des données se trouvant dans les registres 142.

Dans cette configuration, en amont de chaque circuit mémoire secondaire 120, un circuit additionnel peut générer, à partir de l'unique signal reçu, le signal de données numériques, le signal d'horloge de décalage commandant les registres à décalage 126, et le signal de déclenchement de mémorisation commandant la mémorisation, dans les verrous 128, des valeurs des données présentes dans les registres 126.

Cette configuration a pour avantage de limiter le nombre de fils connectés en entrée et en sortie des blocs d'affichage 106, facilitant ainsi la réalisation du dispositif 100.

Dans les configurations précédemment décrites, les données sont transmises sur des fils distincts de ceux utilisés pour l'alimentation électrique. En variante, il est possible que les données numériques soient transmises en étant modulées dans les signaux d'alimentation électrique. Dans ce cas, une étape supplémentaire de démodulation est mise en œuvre dans les blocs d'affichage 106. Des détails de réalisation d'une telle variante sont expliqués dans le document EP 3 649 672 A1 et peuvent être appliqués par analogie dans la présente invention.

Outre les éléments dédiés à l'affichage des données numériques, le dispositif d'affichage 100 peut comporter des circuits de gestion des erreurs de transmission (code de parité, correction d'erreurs, bits de signalisation, etc.) et les circuits de contrôles 114 peuvent comporter les traitements numériques associés.

Dans tous les modes de réalisation et variantes, les circuits de contrôle 114 et/ou la carte vidéo 108 peuvent réaliser, en plus de l'envoi des données numériques à afficher et des signaux d'horloge à chaque groupe 104 et/ou bloc d'affichage 106, un ou plusieurs traitements numériques des données à afficher avant leur compression ou après la décompression. Ce ou ces traitements numériques des données peuvent correspondre par exemple à une correction de luminosité (qui se traduira par un ajustement de l'intensité des signaux analogiques envoyés dans les éléments lumineux), une correction de gamma (qui se traduira par une application de coefficients d'ajustement aux valeurs des signaux analogiques envoyées aux éléments lumineux en fonction d'une courbe de correction de couleur pour toute la matrice 102), ou une calibration des éléments lumineux 118 (qui se traduira par une application de coefficients d'ajustement aux valeurs des signaux analogiques envoyées aux éléments lumineux en fonction des couleurs à corriger). En outre, un ou plusieurs de ces traitements numériques peuvent également être réalisés directement dans chaque bloc d'affichage 106, en ajoutant dans ce cas un ou plusieurs circuits de traitement numérique de données dans les blocs d'affichage 106.

Un tel traitement numérique peut correspondre à une opération dite d' « upscaling », permettant d'afficher une image sur une matrice 102 dont la résolution est plus grande que celle de l'image à afficher reçue par la carte vidéo 108. Le traitement réalisé sur les données numériques pour réaliser cet upscaling peut être mis en œuvre au sein des circuits de contrôle 114. Suivant le type d'upscaling réalisé, chaque circuit de contrôle 114 peut recevoir, en plus des données numériques à afficher par le bloc d'affichage 106 qui lui est associé, une partie des données numériques à afficher par un ou plusieurs blocs d'affichage 106 voisins, afin de calculer les données supplémentaires à afficher par le bloc d'affichage 106 qui lui est associé. En variante, cette opération d'upscaling peut être réalisée dans la carte vidéo 108, avant la compression et l'envoi des données compressées aux circuits de contrôle 114.

Dans tous les modes de réalisation, il est possible qu'une partie seulement des données numériques à afficher soient compressées, par exemple lorsque seule la compression de cette partie des données permet de réduire la quantité de données à transmettre sur les bus 113.

Dans tous les modes de réalisation, les différentes liaisons formées par des fils électriques peuvent être remplacées par des liaisons optiques ou RF.

Dans les différents exemples de réalisation précédemment décrits, chaque circuit de contrôle 114 est associé à un bloc d'affichage 106. En variante, il est possible que chaque circuit de contrôle 114 soit associé à plusieurs blocs d'affichage 106.

Dans tous les modes et exemples de réalisation précédemment décrits, il est possible que les tensions d'alimentation transmises aux éléments lumineux 118 aient une valeur supérieure à celle avec laquelle les éléments lumineux 118 sont destinés à fonctionner. Pour une puissance de valeur donnée à transmettre aux éléments lumineux 118, cela permet de transmettre cette puissance avec un courant moindre, ce qui va permettre au final de réduire les chutes de tension, et donc les pertes liées aux résistances d'accès. Dans une telle configuration, le dispositif 100 comporte des circuits réducteurs de tension interposés entre la source d'alimentation électrique du dispositif 100 et les éléments lumineux 118 et qui permettent d'adapter la valeur de la tension reçue à celle souhaitée pour le fonctionnement des éléments lumineux 118. De manière avantageuse, les circuits réducteurs de tension peuvent être intégrés aux circuits de contrôle 114, ce qui permet de ne pas augmenter le nombre de puces à reporter sur le support.

Dans les exemples de réalisation précédemment décrit, le dispositif 100 est configuré pour afficher, sur la matrice 102, une seule image à la fois. Dans ces exemples, chaque bloc d'affichage 106 comporte plusieurs éléments lumineux 118, ou plusieurs ensembles d'éléments lumineux 118, et plusieurs circuits de pilotage 122 permettant l'affichage de plusieurs pixels d'une seule image affichée par le dispositif 100. Chaque pixel est affiché par un élément lumineux 118 dans le cas d'un dispositif 100 correspondant à un écran monochrome, ou par un ensemble d'éléments lumineux 118 (par exemple trois ou quatre éléments lumineux 118) émettant des lumières de couleurs différentes dans le cas d'un dispositif 100 correspondant à un écran couleur.

Selon une variante (qui peut s'appliquer aux différents modes de réalisation et configurations décrits précédemment), le dispositif 100 peut correspondre à un dispositif multiscopique destiné à afficher simultanément une image selon plusieurs points de vue, ou angles de vue, dans le but d'afficher cette image en 3D. Dans ce cas, un pixel de l'image à afficher en 3D est formé d'autant de sous-pixels que de points de vue de l'image à afficher par le dispositif 100. Les sous-pixels qui forment un pixel de l'image 3D correspondent à des pixels de mêmes coordonnées spatiales au sein des images formant les différents points de vue à afficher simultanément par le dispositif 100. Les images formant les différents points de vue d'une image 3D comportent toutes le même nombre de pixels.

Dans le cas d'un tel dispositif 100 multiscopique, il est avantageux de réaliser la compression / décompression des données numériques en utilisant les corrélations très fortes existant entre les images formant les différents points de vue d'une même image 3D.

Dans le cas d'un tel dispositif 100 multiscopique, il est possible que chaque bloc d'affichage 106 soit configuré pour afficher un seul pixel de l'image 3D, c'est-à-dire pour afficher les différents sous-pixels formant ce pixel. Chaque sous-pixel est affiché par un élément lumineux 118 dans le cas d'un dispositif 100 correspondant à un écran monochrome, ou par un ensemble d'éléments lumineux 118 émettant des lumières de couleurs différentes dans le cas d'un dispositif 100 correspondant à un écran couleur. Dans cette configuration, tous les éléments lumineux 118 d'un même bloc d'affichage 106 ainsi que le circuit de contrôle 114 associé à ce bloc d'affichage 106 peuvent être réalisés sur une même puce électronique. La figure 8 représente schématiquement un circuit de contrôle 114 et une partie des éléments du bloc d'affichage 106 associé à ce circuit, dans une telle configuration, réalisés sur une même puce électronique. Sur cette figure, les circuits mémoire secondaires 120 comportent uniquement les verrous 128 (et pas les registres à décalage 126) car étant donné que le circuit de contrôle 114 et le bloc d'affichage 106 associé sont réalisés sur une même puce électronique, la distribution des données entre le circuit de contrôle 114 et chaque circuit mémoire secondaire 120 peut être réalisée directement par une connexion dédiée.

A titre d'exemple, le dispositif 100 peut être configuré pour afficher une image 3D de résolution égale à 1920 x 1080 pixels, c'est-à-dire un affichage simultané de N images chacune de résolution égale à 1920 x 1080 sous-pixels et correspondant à un point de vue différent d'une même scène, N étant un nombre entier par exemple égal à 49 ou un tout autre nombre supérieur à 1 permettant de réaliser un affichage multiscopique d'une image.

Dans le cas d'un dispositif 100 multiscopique, il est également possible que chaque bloc d'affichage 106 comporte les éléments lumineux 118, les circuits de pilotages 122 et les circuits mémoires secondaires 120 destinés à afficher plusieurs pixels, c'est-à-dire plusieurs ensembles de sous-pixels. Dans ce cas, il peut être avantageux que le ou les circuits de compression 115 réalisent une première compression des données au sein de chacune des images correspondant aux différents points de vue à afficher, mettant à profit la redondance au sein de chaque pixel de l'image 3D, puis une deuxième compression des données en considérant les données de plusieurs pixels adjacents faisant partie d'un même bloc d'affichage 106, mettant à profit la redondance entre les pixels voisins de l'image 3D. A la réception des données ainsi compressées, chaque circuit de contrôle 114 réalise, via le circuit de décompression 127, une première décompression des données destinés à tous les blocs d'affichage 106 associés à ce circuit de contrôle. Les données obtenues après cette première décompression sont mémorisées dans le circuit mémoire principal 124 du circuit de contrôle 114, puis réparties et envoyées au bloc d'affichage 106 adéquat. Chaque bloc d'affichage 106 comporte en outre un circuit de décompression secondaire 146 recevant les données envoyées depuis le circuit mémoire principal 124 et réalisant une deuxième décompression des données correspondant à un seul pixel de l'image 3D à afficher. Chaque bloc d'affichage 106 peut comporter en outre un circuit mémoire 148 dans lequel les données décompressées sont mémorisées avant leur envoi aux circuits mémoire secondaires 120 du bloc 106.

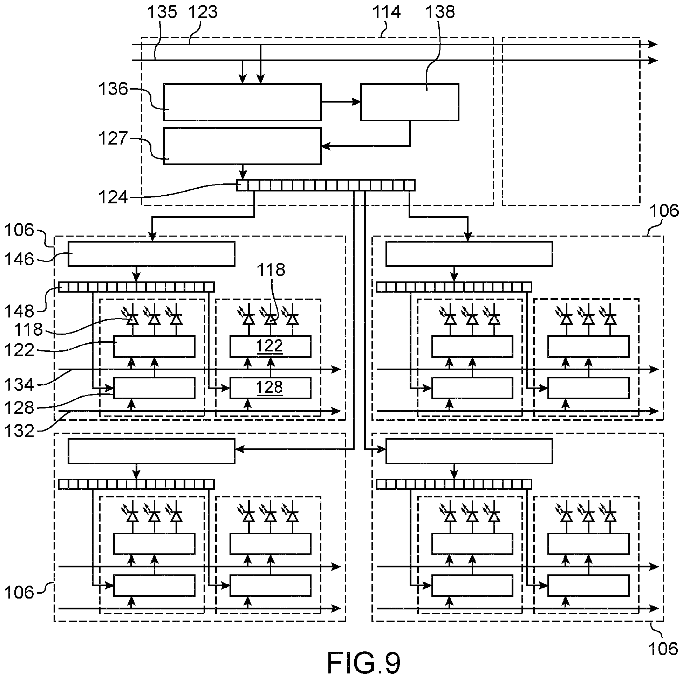

La figure 9 représente schématiquement une telle configuration, dans laquelle chaque circuit de contrôle 114 est associé à un groupe de 2 x 2 blocs d'affichage 106. En variante, chaque circuit de contrôle 114 peut être associé à un nombre de blocs d'affichage différent de 4, par exemple 16 blocs d'affichage 106 agencés en groupe de 4 x 4 blocs. En outre, sur l'exemple de la figure 9, les circuits mémoire secondaires sont formés uniquement par les verrous 128.

De manière alternative, les circuits de décompression secondaire 146 peuvent être formés au sein des circuits de contrôle 114.

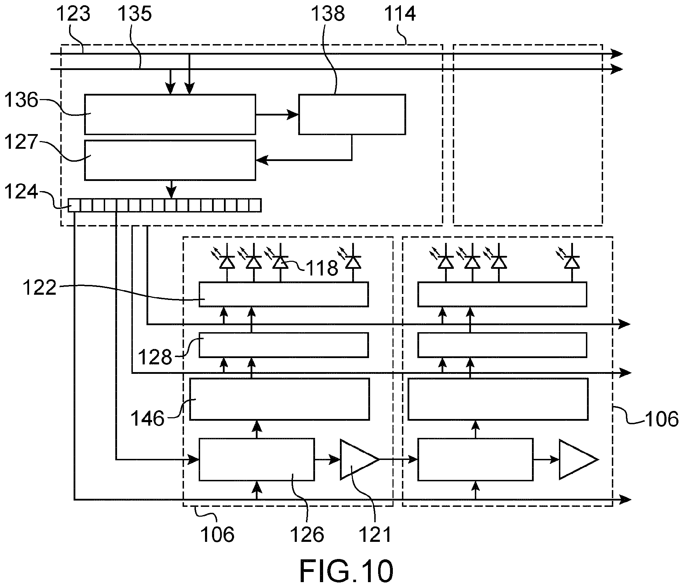

Lorsque chaque circuit de contrôle 114 est associé à un nombre important de blocs d'affichage 106, par exemple à un groupe de 8 x 8 blocs 106, il est possible d'utiliser, au sein de chaque bloc d'affichage 106, les registres à décalage 126 et d'avoir les circuits de décompression secondaires 146 interposés entre les registres à décalages 126 et les verrous 128. Cette configuration a pour avantage de réduire le nombre de fils entre les circuits de contrôle 114 et les blocs d'affichage 106. La figure 10 représente schématiquement une telle configuration. Sur l'exemple de la figure 10, chaque bloc d'affichage 106 comporte un seul registre 126 et un verrou 128 dont les capacités mémoire permettent la mémorisation de toutes les données destinées à être affichées par le bloc d'affichage 106.

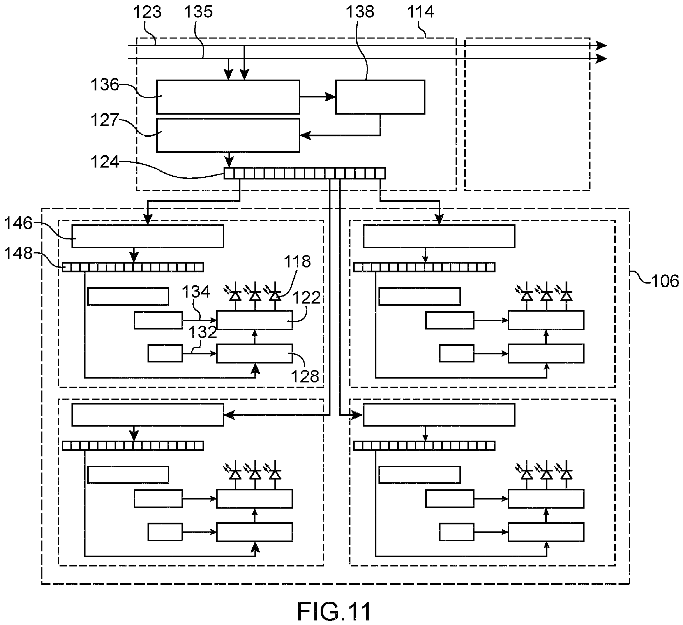

Les différentes configurations décrites ci-dessus relatives à la réalisation d'un dispositif 100 multiscopique peuvent s'appliquer également, de manière analogue, à la réalisation d'un dispositif d'affichage 100 qui ne soit pas multiscopique mais dans lequel les données sont compressées temporellement, c'est-à-dire que les différentes images compressées ne correspondent pas à des images selon des points de vue différents à afficher simultanément, mais à des images destinées à être affichées séquentiellement, les unes après les autres, par le dispositif 100. La figure 11 représente un tel exemple de réalisation, dans lequel chaque bloc d'affichage 106 est configuré pour afficher plusieurs pixels, ici un bloc de 2 x 2 pixels. Dans cet exemple de réalisation, le ou les circuits de compression 115 réalisent une première compression des données au sein de chacune des images à afficher, mettant à profit la redondance temporelle dans des pixels de même coordonnées spatiales, puis une deuxième compression des données en considérant les données de plusieurs pixels adjacents, mettant à profit la redondance entre les pixels voisins d'une même image. A la réception des données ainsi compressées, chaque circuit de contrôle 114 réalise, via le circuit de décompression 127, une première décompression des données destinées à tous les éléments lumineux 118 du bloc d'affichage 106 associé à ce circuit de contrôle 114. Les données obtenues après cette première décompression sont mémorisées dans le circuit mémoire principal 124 du circuit de contrôle 114, puis réparties et envoyées aux différents circuits de décompression secondaires 146 du bloc d'affichage 106 qui reçoivent les données envoyées depuis le circuit mémoire principal 124 et qui réalisent une deuxième décompression des données correspondant à un seul pixel des images à afficher successivement. Les données décompressées sont stockées dans des circuits mémoire 148 avant leurs envois successifs aux verrous 118.

Dans tous les modes et variantes de réalisation précédemment décrits, les liaisons électriques entre les circuits de contrôle 114 et les blocs d'affichage 106 sont représentées par un ou plusieurs fils reliant ces éléments, par exemple un ou plusieurs fils reliant un des circuits mémoire principaux 124 à un ou plusieurs circuits mémoire secondaires 120 ou à un ou plusieurs circuits de décompression secondaires 146. En pratique, ces liaisons comportent généralement un ou plusieurs circuits électroniques intermédiaires commandant le transfert des données depuis les circuits mémoire principaux 124 jusqu'aux blocs d'affichage 106.

En outre, dans tous les modes et variantes de réalisation précédemment décrits, il est possible que les données reçues sur l'entrée 110 de la carte vidéo 108 soient compressées dans un format différent de celui adapté à la matrice de pixels 102, c'est-à-dire ayant subi une compression par un algorithme différent de celui appliqué par le ou les circuits de compression 115 pour compresser les données avant leur envoi sur la ou les sorties 112. Dans ce cas, chaque circuit de contrôle 114 comporte un circuit de décompression additionnel permettant de décompresser les données en appliquant l'opération inverse de celle utilisée pour la compression réalisée en amont de l'envoi des données à la carte vidéo 108.

## Revendications

1. Dispositif d'affichage (100) comportant au moins :
- une matrice (102) de blocs d'affichage (106), chaque bloc d'affichage (106) étant configuré pour afficher au moins un pixel d'une image et comprenant plusieurs éléments lumineux (118) et au moins un circuit (122) de pilotage configuré pour générer des signaux de commande des éléments lumineux (118) du bloc d'affichage (106) à partir de données numériques destinées à être affichées par les éléments lumineux (118) du bloc d'affichage (106) ;
- une matrice de circuits de contrôle (114), chacun couplé et associé à au moins un bloc d'affichage (106) et comportant un premier circuit mémoire principal (124) configuré pour stocker les données numériques destinées à être affichées par les éléments lumineux (118) du bloc d'affichage (106) associé ;
- une carte vidéo (108) comprenant au moins une entrée (110) configurée pour recevoir un signal numérique à afficher par la matrice (102) de blocs d'affichage (106), et au moins une sortie (112) de données numériques couplée à la matrice de circuits de contrôle (114) par un circuit de distribution de données, la carte vidéo (108) étant configurée pour décoder le signal numérique et envoyer aux circuits de contrôle (114) les données numériques destinées à être affichées par les éléments lumineux (118) qui sont issues du signal numérique reçu par la carte vidéo et encodées dans un format adapté à la matrice (102) de blocs d'affichage (106) ;
et dans lequel :
- la carte vidéo (108) comporte au moins un circuit de compression (115) configuré pour compresser, avant leur envoi sur la sortie (112), les données numériques destinées à être affichées par les éléments lumineux (118) ;
- chaque circuit de contrôle (114) comporte un circuit de décompression (127) configuré pour décompresser les données numériques destinées à être affichées par les éléments lumineux (118) du bloc d'affichage (106) associé au circuit de contrôle (114) avant leur stockage dans le premier circuit mémoire principal (124) du circuit de contrôle (114).

2. Dispositif d'affichage (100) selon la revendication 1, dans lequel chaque bloc d'affichage (106) correspond à un module (105) distinct des autres blocs d'affichage (106) et reporté sur un support (107) sur lequel se trouve la matrice de circuits de contrôle (114).

3. Dispositif d'affichage (100) selon l'une des revendications précédentes, dans lequel chaque circuit de contrôle (114) comporte en outre un deuxième circuit mémoire principal (138) configuré pour mémoriser les données numériques compressées reçues par le circuit de contrôle (114) et destinées à être affichées par les éléments lumineux (118) du bloc d'affichage (106) associé au circuit de contrôle (114).

4. Dispositif d'affichage (100) selon la revendication 3, dans lequel le deuxième circuit mémoire principal (138) de chaque circuit de contrôle (114) est de type FIFO.

5. Dispositif d'affichage (100) selon l'une des revendications précédentes, dans lequel le circuit de compression (115) de la carte vidéo (108) et le circuit de décompression (127) de chaque circuit de contrôle (114) sont configurés pour mettre en œuvre au moins un algorithme de compression / décompression de type JPEG, RLE ou de Golomb.

6. Dispositif d'affichage (100) selon l'une des revendications précédentes, dans lequel chaque bloc d'affichage (106) est configuré pour afficher un bloc de 8 x 8 pixels de l'image, ou un bloc de 16 x 16 pixels de l'image, ou un bloc de 32 x 32 pixels de l'image.

7. Dispositif d'affichage (100) selon l'une des revendications précédentes, dans lequel le circuit de compression (115) de la carte vidéo (108) et le circuit de décompression (127) de chaque circuit de contrôle (114) sont configurés pour mettre en œuvre plusieurs algorithmes de compression / décompression différents pour compresser et décompresser les données numériques correspondant à une ou plusieurs images destinées à être affichées par la matrice (102) de blocs d'affichage (106).

8. Dispositif d'affichage (100) selon l'une des revendications précédentes, dans lequel le dispositif d'affichage (100) est un dispositif multiscopique dans lequel :
- chaque bloc d'affichage (106) est configuré pour afficher au moins un pixel d'une image 3D formée par N images de mêmes dimensions destinées à être affichées simultanément par le dispositif d'affichage, chaque pixel de l'image 3D comprenant N sous-pixels de mêmes coordonnées spatiales et appartenant chacun à l'une des N images,
- le circuit de compression (115) est configuré pour compresser les données numériques destinées à être affichées par les éléments lumineux (118) de chaque bloc d'affichage (106) en utilisant une redondance d'informations entre les N sous-pixels d'un même pixel.

9. Dispositif d'affichage (100) selon la revendication 8, dans lequel :
- le circuit de compression (115) est configuré pour réaliser une première compression utilisant une redondance d'informations entre les N sous-pixels d'un même pixel, et pour réaliser une deuxième compression des données issues de la première compression en utilisant une redondance d'informations entre des pixels voisins destinés à être affichés par un même bloc d'affichage (106) ;
- le circuit de décompression (127) de chaque circuit de contrôle (114) est configuré pour réaliser une décompression correspondant à l'opération inverse de la deuxième compression ;
- chaque bloc d'affichage (106) comporte un circuit de décompression secondaire (146) configuré pour réaliser une décompression correspondant à l'opération inverse de la première compression.

10. Dispositif d'affichage (100) selon l'une des revendications 1 à 7, dans lequel :
- le circuit de compression (115) est configuré pour réaliser une première compression utilisant une redondance d'informations entre les données numériques correspondant à plusieurs pixels de mêmes coordonnées spatiales et appartenant à plusieurs images de mêmes dimensions destinées à être affichées successivement par le dispositif d'affichage (100), et pour réaliser une deuxième compression des données issues de la première compression en utilisant une redondance d'informations entre des pixels voisins destinés à être affichés simultanément par un même bloc d'affichage (106) ;
- le circuit de décompression (127) de chaque circuit de contrôle (114) est configuré pour réaliser une décompression correspondant à l'opération inverse de la deuxième compression ;
- chaque bloc d'affichage (106) comporte un circuit de décompression secondaire (146) configuré pour réaliser une décompression correspondant à l'opération inverse de la première compression.

11. Dispositif d'affichage (100) selon l'une des revendications précédentes, dans lequel chaque circuit de contrôle (114) comporte au moins un circuit de réception de données (136) configuré pour identifier les données numériques destinées à être affichées par les éléments lumineux (118) du bloc d'affichage (106) associé au circuit de contrôle (114).

12. Dispositif d'affichage (100) selon l'une des revendications 1 à 10, dans lequel les circuits de contrôle (114) comportent des registres à décalage (116) distincts des circuits mémoires principaux (124) et couplés en série d'un circuit de contrôle (114) à l'autre.

13. Dispositif d'affichage (100) selon l'une des revendications précédente, dans lequel la carte vidéo (108) comporte en outre au moins une mémoire (125) de type FIFO configurée pour stocker les données numériques destinées à être affichées par les éléments lumineux (118) avant leur envoi aux circuits de contrôle (114).

14. Dispositif d'affichage (100) selon l'une des revendications précédentes, dans lequel chaque circuit de contrôle (114) est formé par une puce distincte du bloc d'affichage (106) associé, ou dans lequel chaque circuit de contrôle (114) est intégré dans le bloc d'affichage (106) associé.
